(19) **Europäisches Patentamt**
**European Patent Office**
**Office européen des brevets**

(11) **EP 3 521 316 A1**

(12) **EUROPEAN PATENT APPLICATION**
published in accordance with Art. 153(4) EPC

(43) Date of publication:
**07.08.2019 Bulletin 2019/32**

(51) Int Cl.:
**C08B 3/06** (2006.01)

(21) Application number: **17858315.9**

(22) Date of filing: **29.09.2017**

(86) International application number:
**PCT/JP2017/035557**

(87) International publication number:
**WO 2018/066477 (12.04.2018 Gazette 2018/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **03.10.2016 JP 2016195493**

(71) Applicant: **Daicel Corporation**
**Osaka-shi, Osaka 530-0011 (JP)**

(72) Inventors:
• **KUWANA, Akihiro**
**Tokyo 108-8230 (JP)**
• **TAMAGAKI, Hiroaki**
**Tokyo 108-8230 (JP)**

(74) Representative: **Grünecker Patent- und Rechtsanwälte**
**PartG mbB**
**Leopoldstraße 4**
**80802 München (DE)**

(54) **CELLULOSE ACETATE AND METHOD FOR PRODUCING CELLULOSE ACETATE**

(57) To provide cellulose acetate that exhibits excellent hue even though it is produced by using low grade pulp having a particularly low $\alpha$-cellulose content, and also achieves excellent moldability and excellent production efficiency of a molded article. A method for producing cellulose acetate is also provided, the method that can provide cellulose acetate with excellent stable productivity and production efficiency without passing through steps such as extraction. The cellulose acetate of the present invention includes xylose with a molar content rate of greater than 7.0 mol% and not greater than 15 mol% in a sum of molar contents of xylose, mannose, and glucose; and has a hue of not less than 0.60 cm$^{-1}$ and less than 0.80 cm$^{-1}$ at a wavelength of 430 nm by absorptiometry; and a 6% viscosity of not greater than 160 mPa·s.

EP 3 521 316 A1

**Description**

Technical Field

The present invention relates to cellulose acetate and a method for producing cellulose acetate.

Background Art

To produce cellulose acetate with excellent hue, a dissolving pulp, which is a specially produced pulp, has been conventionally used as a raw material in standard technology in the related art. This dissolving pulp, which typically contains not less than 98 wt.% of an α-cellulose component, is extremely high grade. The raw material of dissolving pulp is wood chips, which contains a considerably large amount of cellulose materials other than α-cellulose, such as hemicellulose. Therefore, to obtain dissolving pulp from these wood chips, special processing is required in wood chip handling equipment, cooking, washing, bleaching, and drying in the pulp production process, and the yield may be sacrificed to increase the α-cellulose purity. Furthermore, the dissolving pulp is required to have high α-cellulose purity, but at around 90% α-cellulose content, the increase in the α-cellulose content by 1% leads to decrease in the pulp yield from raw pulpwood by 2 to 3%. Further increase in the α-cellulose content leads to greater loss of the yield. Therefore, the production of the dissolving pulp having an α-cellulose content of not less than 98 wt.% has an extremely high environmental impact.

Thus, measures for obtaining higher quality cellulose acetate without converting low grade pulp having low α-cellulose content into high grade pulp have been examined in the past. For example, Patent Document 1 describes a method to obtain secondary cellulose acetate excelling in transparency, filterability, and spinnability by breaking down wood pulp having an α-cellulose content from 92 to 93% in a dilute acetic acid aqueous solution to form a slurry, then repeating liquid removal and acetic acid substitution, which is what is called slurry pretreatment, and producing primary cellulose acetate by a known technology, followed by completely neutralizing a sulfuric acid catalyst in the reaction system and saponifying and aging the reaction mixture at 125 to 170°C.

Patent Document 2 discloses that cellulose acetate with an extremely excellent hue can be obtained by preparing cellulose acetate from a cellulose raw material subjected to a swelling treatment with a solvent even though using viscose having a low α-cellulose content and a cellulose raw material for cellulose ether.

Citation List

Patent Literature

Patent Document 1: US 3,767,642 Specification
Patent Document 2: JP 62-000501 A

Summary of Invention

Technical Problem

A method as described in Patent Document 1 to obtain cellulose acetate having excellent hue (e.g., low YI value) by removing impurities such as hemicellulose components other than α-cellulose components by extraction negates the effect of reducing the environmental impact, the effect otherwise achieved by using low grade pulp.

In addition, the cellulose acetate production method described in Patent Document 2 has a drawback that the hue improvement effect is low when pulp with a low α-cellulose content, such as an α-cellulose content of not greater than 90%, is used as a raw material.

An object of the present invention is to obtain cellulose acetate that exhibits excellent hue even though it is produced by using low grade pulp having a particularly low α-cellulose content, and also achieves excellent moldability and excellent production efficiency of a molded article. Another object is to provide a method for producing cellulose acetate, with which cellulose acetate with excellent stable productivity and production efficiency can be obtained without steps such as extraction.

Solution to Problem

A first aspect of the present invention relates to cellulose acetate

including xylose with a molar content rate of greater than 1.0 mol% and not greater than 15 mol% in a sum of molar contents of xylose, mannose, and glucose;
having a hue of not greater than 0.80 cm$^{-1}$ at a wavelength of 430 nm by absorptiometry,
wherein the cellulose acetate includes xylose with a molar content rate of greater than 1.0 mol% and not greater than 5.0 mol% in a sum of molar contents of xylose, mannose, and glucose;
having a hue of not less than 0.60 cm$^{-1}$ and not greater than 0.80 cm$^{-1}$ at a wavelength of 430 nm by absorptiometry is excepted; and
having a 6% viscosity of not greater than 160 mPa•s.

The cellulose acetate may include xylose with a molar content rate of not less than 1.2 mol% in a sum of molar contents of xylose, mannose, and glucose.

The cellulose acetate may include xylose with a molar content rate of not greater than 5.0 mol% in a sum of molar contents of xylose, mannose, and glucose.

The cellulose acetate may
include xylose with a molar content rate of greater than 7.0 mol% and not greater than 15 mol% in a sum of molar contents of xylose, mannose, and glucose, and
have a hue of not less than 0.60 cm$^{-1}$ and less than 0.80 cm$^{-1}$ at a wavelength of 430 nm by absorptiometry.

The cellulose acetate may
include xylose with a molar content rate of greater than 5.0 mol% and not greater than 7.0 mol% in a sum of molar contents of xylose, mannose, and glucose, and have a hue of not less than 0.60 cm$^{-1}$ and less than 0.80 cm$^{-1}$ at a wavelength of 430 nm by absorptiometry.

The cellulose acetate may have a magnesium content of preferably greater than 5 ppm and not greater than 40 ppm.

A second aspect of the present invention relates to a method for producing cellulose acetate, the method including the steps of:

(1) crushing wood pulp;
(2) pretreating the crushed wood pulp by bringing the crushed wood pulp into contact with acetic acid;
(3) acetylating the wood pulp by reacting the wood pulp with acetic anhydride after the pretreatment;
(4) hydrolyzing the cellulose acetate obtained by the acetylation; and
(5) precipitating the cellulose acetate whose degree of acetyl substitution has been adjusted by the hydrolysis;

wherein, in the step (4) of hydrolysis, a temperature in the hydrolysis reaction system of higher than 80°C and not higher than 90°C is maintained for not shorter than 100 minutes and not longer than 150 minutes.

Advantageous Effects of Invention

According to the present invention, cellulose acetate can be obtained, the cellulose acetate that exhibits excellent hue even though it is produced by using low grade pulp having a particularly low α-cellulose content, and also achieves excellent moldability and excellent production efficiency of a molded article. In addition, cellulose acetate can be obtained with excellent stable productivity and production efficiency without steps such as extraction.

Brief Description of Drawings

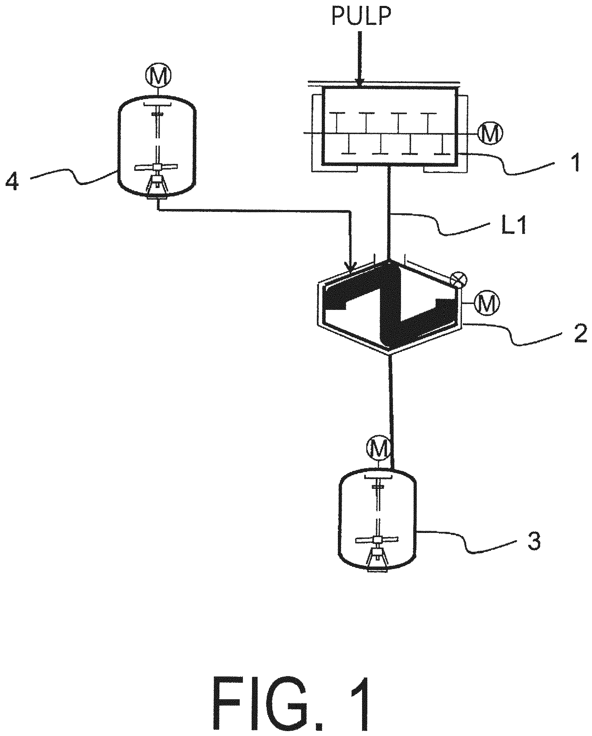

FIG. 1 is a schematic view illustrating one embodiment of a device for producing cellulose acetate.

Description of Embodiments

The cellulose acetate of the present disclosure may
include xylose with a molar content rate of greater than 1.0 mol% and not greater than 15 mol% in a sum of molar contents of xylose, mannose, and glucose, and having a hue of not greater than 0.80 cm$^{-1}$ at a wavelength of 430 nm by absorptiometry,
wherein the cellulose acetate includes xylose with a molar content rate of greater than 1.0 mol% and not greater than 5.0 mol% in a sum of molar contents of xylose, mannose, and glucose, and have a hue of not less than 0.60 cm$^{-1}$ and not greater than 0.80 cm$^{-1}$ at a wavelength of 430 nm by absorptiometry is excepted; and
having a 6% viscosity of not greater than 160 mPa•s.

The cellulose acetate of the present disclosure, having less coloring components resulting from decomposition of hemicellulose components, exhibits excellent hue even though the molar content rate of xylose, which is a hemicellulose component, is relatively high correspondingly to the low α-cellulose content. Moreover, the cellulose acetate also excels in moldability and production efficiency when molded into a molded article.

Xylose

The cellulose acetate may include xylose with a molar content rate of greater than 1.0 mol% and not greater than 15 mol% in a sum of molar contents of xylose, mannose, and glucose, wherein the lower limit thereof may be not less than 1.2 mol%, not less than 2.0 mol%, not less than 3.0 mol%, and not less than 4.0 mol%, and the upper limit thereof may be not greater than 14 mol%, not greater than 13 mol%, not greater than 10 mol%, not greater than 7.0 mol%, and not greater than 5.0 mol%. The cellulose acetate including xylose with the lower limit of not less than 1.2 mol% leads to excellent pulp yield. In addition, the cellulose acetate including xylose with the upper limit of not greater than 5.0 mol% excels particularly in hue.

In a case where the cellulose acetate of the present disclosure has a hue of not less than 0.60 $cm^{-1}$ and less than 0.80 $cm^{-1}$ at a wavelength of 430 nm by absorptiometry, the cellulose acetate may include xylose with a molar content rate of greater than 7.0 mol% and not greater than 15 mol%, or greater than 5.0 mol% and not greater than 7.0 mol% in a sum of molar contents of xylose, mannose, and glucose. This is because the cellulose acetate has sufficient moldability and hue, and thus can maintain its product value as cellulose acetate.

Xylose, mannose, and glucose are present as saccharides constituting the cellulose acetate according to the present disclosure, wherein a molar content rate of xylose in a sum of molar contents of xylose, mannose, and glucose can be determined by the following method.

A cellulose sample undergoes a hydrolysis process, a neutralizing process with sodium hydroxide, and a filtration process using a filter, followed by the use of HPLC (LC-20A system) to determine not only the rate of xylose, but also the rates of the other constituent saccharides from the obtained data, and thus the molar content rate of xylose can be determined therefrom.

Hue by absorptiometry

The cellulose acetate according to the present disclosure has a hue of not greater than 0.80 $cm^{-1}$ at a wavelength of 430 nm by absorptiometry, and the smaller values thereof are preferred. The lower limit thereof is not particularly limited, but, for example, it may be not less than 0.1 $cm^{-1}$, not less than 0.2 $cm^{-1}$, and not less than 0.3 $cm^{-1}$, and the upper limit thereof is preferably not greater than 0.65 $cm^{-1}$, and more preferably not greater than 0.40 $cm^{-1}$.

On the other hand, in a case where the cellulose acetate according to the present disclosure includes xylose with a molar content rate of greater than 7.0 mol% and not greater than 15 mol%, or greater than 5.0 mol% and not greater than 7.0 mol% in a sum of molar contents of xylose, mannose, and glucose, the hue by absorptiometry may be not less than 0.60 $cm^{-1}$ and less than 0.80 $cm^{-1}$.

The hue at a wavelength of 430 nm by absorptiometry of the cellulose acetate according to the present disclosure can be determined by the following method. A DMSO solution with a known concentration of cellulose acetate is prepared as a sample, the absorbance at a wavelength of $\lambda$ = 430 nm and the absorbance at a wavelength of $\lambda$ = 740 nm are each measured to determine the difference in absorbance, and a value obtained by converting the cellulose acetate concentration to 100% is used as the hue at a wavelength of 430 nm by absorptiometry. The hue by absorptiometry is calculated by the following equation.

$$\text{Hue by absorptiometry (cm}^{-1}) = \text{absorbance (A - B)/cell thickness (cm)/cellulose acetate concentration (wt.\%) x 100}$$

Absorbance: Measured with a spectrophotometer UV-1700 available from Shimadzu Corporation

A: Absorbance at 430 nm (The yellowness of the liquid is measured)
B: Absorbance at 740 nm (The turbidity of the liquid is measured; base line)

Cellulose acetate concentration (wt.%): Absolute dry cellulose acetate weight (g) / total weight (g) of cellulose acetate solution x 100
Absolute dry cellulose acetate weight (g): Cellulose acetate weight (g) x (1 - (water content (%))/100)
Water content (%): Infrared moisture analyzer METTLER TOLEDO HB43

6% Viscosity

The cellulose acetate according to the present disclosure has a 6% viscosity of not greater than 160 mPa•s, wherein the upper limit thereof may be not greater than 155 mPa•s, or not greater than 150 mPa•s.This is because the cellulose acetate with a viscosity in the range stipulated above excels in moldability of a molded article and production efficiency thereof, as well as in stable productivity and production efficiency of the cellulose itself. In addition, the lower limit thereof is not particularly limited, but, for example, may be not less than 60 mPa•s, or not less than 110 mPa•s. Cellulose acetate with a 6% viscosity of less than 60 mPa•s has a decreased mechanical strength.

To reduce the 6% viscosity, the temperature in the hydrolysis reaction system needs to be increased, and this degrades the hue at a wavelength of 430 nm by absorptiometry. Furthermore, a cellulose acetate with a 6% viscosity of less than 60 mPa•s has also a too small molecular weight, and thus such a cellulose acetate, when formed into a molded article, may cause a problem with the mechanical strength (particularly brittleness) depending on the application. Alternatively, in a case where a cellulose acetate having a 6% viscosity of greater than 160 mPa•s is included in a mixture and the mixture is sent through a line to a precipitating tank in the cellulose acetate production process, such a cellulose acetate tends to clog the line, reducing the production efficiency of the cellulose acetate. In addition, in a molding step, where the obtained cellulose acetate is molded into a molded article such as a fiber and a film, a solution prepared by dissolving the cellulose acetate in a solvent such as methylene chloride or acetone (the solution, namely dope) tends to clog a filter material, thus reducing the production efficiency of these molded articles. In particular, when the cellulose acetate is used to shape the article through thermoforming (extrusion molding, injection molding), the resulting article is inferior in moldability.

The 6% viscosity is obtained by using an Ostwald viscometer to measure the viscosity of a 6 wt./vol% solution, which is prepared by dissolving 3.00 g of a dry sample in 39.90 g of a 95% acetone aqueous solution.

Calcium content and magnesium content

A large portion of the calcium and magnesium included in the cellulose acetate of the present disclosure may be derived from a neutralizing agent, a stabilizer, or a washing water used when producing the cellulose acetate, and the calcium and magnesium are present, for example, through adhesion to the surface of cellulose acetate flakes, or by electrostatic interaction with carboxyl groups contained in cellulose fibers or with sulfate ester moieties formed during production.

The cellulose acetate according to the present disclosure has a calcium content of preferably not less than 60 ppm and not greater than 100 ppm, more preferably not less than 70 ppm and not greater than 100 ppm, still more preferably not less than 80 ppm and not greater than 100 ppm, and most preferably not greater than 90 ppm and not less than 100 ppm. This is because the cellulose acetate with a too low calcium content tends to worsen its heat resistance, and a cellulose acetate with a too high calcium content tends to degrade its hue.

The cellulose acetate according to the present disclosure has a magnesium content of preferably greater than 5 ppm and not greater than 40 ppm, more preferably greater than 5 ppm and not greater than 35 ppm, still more preferably greater than 5 ppm and not greater than 30 ppm, and most preferably greater than 5 ppm and not greater than 25 ppm. This is because a cellulose acetate with a too low magnesium content tends to worsen its heat resistance, and a cellulose acetate with a too high magnesium content tends to degrade its hue.

The calcium content and the magnesium content in the cellulose acetate can each be measured by the following method.

3.0 g of an undried sample is weighed in a crucible, carbonized on an electric heater, and then incinerated in an electric furnace at 750 to 850°C for approximately 2 hours. The residue is then allowed to cool for approximately 30 minutes, after which 25 mL of a 0.07% hydrochloric acid solution is added thereto, and the mixture is heated at 220 to 230°C to dissolve the residue. After the solution is cooled, distilled water is added to the solution to make 200 mL, and the resulting mixture is used as a test liquid. An atomic absorption spectrophotometer is used to measure the absorbance of the test liquid along with that of a standard liquid to determine the calcium (Ca) content or the magnesium (Mg) content of the test liquid. This content is converted by the following equation to determine the calcium (Ca) content or the magnesium (Mg) content in the sample. Note that the water content in the sample can be measured, for example, using a Kett moisture meter (METTLER TOLEDO HB43). Approximately 2.0 g of the sample, which contains water, is placed into an aluminum sample pan of the Kett moisture meter, and the sample is heated at 120°C until the weight no longer changes, and thereby the water content (wt.%) in the sample can be calculated from the change in weight before and after heating.

[Equation 1]

$$\text{Ca or Mg content (ppm) of sample} = \frac{\text{Ca or Mg content (ppm) of test liquid} \times 200}{\text{Sample weight (g)} \times (1 - \text{water content (wt.\%)}/100)}$$

Degree of acetylation

The cellulose acetate according to the present disclosure has a degree of acetylation preferably in a range not less than 51% and not greater than 62%, more preferably in a range not less than 51% and not greater than 58%, and still more preferably in a range not less than 54% and not greater than 58%. The degree of acetylation can be adjusted by the retention time. The retention time is a time period from the end of temperature increase to the completion of the hydrolysis reaction in an aging step. Longer retention time tends to degrade the hue.

Here, the degree of acetylation means the percentage by weight of bonded acetic acid per unit weight of cellulose. The degree of acetylation is in accordance with the measurement and calculation of the degree of acetylation set forth in ASTM-D-817-91 (Standard Test Methods for Cellulose Acetate, etc.). More specifically, the degree of acetylation can be determined as follows. 1.9 g of dried cellulose acetate is precisely weighed and dissolved in 150 mL of a mixed solvent of acetone and dimethyl sulfoxide (volume ratio of 4:1), after which 30 mL of a 1 N sodium hydroxide aqueous solution is added to saponify the solution at 25°C for 2 hours. Phenolphthalein is then added as an indicator, and the excess sodium hydroxide is titrated with 1 N sulfuric acid (concentration factor: F). A blank test is also carried out by the same method as described above, and the degree of acetylation is calculated in accordance with the following equation.

$$\text{Degree of acetylation (\%)} = [6.5 \times (B - A) \times F]/W$$

(In the equation, A represents the titration volume (mL) of the 1 N sulfuric acid for the sample, B represents the titration volume (mL) of the 1 N sulfuric acid for the blank test, F represents the concentration factor of the 1 N sulfuric acid, and W represents the weight of the sample.)

Cellulose acetate production

The method for producing cellulose acetate according to the present disclosure is described in detail. The method includes the steps of:

(1) crushing wood pulp;
(2) pretreating the crushed wood pulp by bringing the crushed wood pulp into contact with acetic acid;
(3) acetylating the wood pulp by reacting the wood pulp with acetic anhydride after the pretreatment;
(4) hydrolyzing the cellulose acetate obtained through the acetylation; and
(5) precipitating the cellulose acetate whose degree of acetyl substitution has been adjusted by the hydrolysis;

wherein, in the step (4) of hydrolysis, a temperature in the hydrolysis reaction system of higher than 80°C and not higher than 90°C is maintained for not shorter than 100 minutes and not longer than 150 minutes. The cellulose acetate of the present disclosure can be produced by the method described above. Note that "Wood Chemistry" (Vol. 1) (Migita et al., published by Kyoritsu Shuppan Co., Ltd., 1968, pages 180 to 190) can be referenced for information on general methods for producing cellulose acetate.

Low grade pulp with a low $\alpha$-cellulose content contains xylose, which is a hemicellulose component, and some of that xylose is oxidized at high temperature to form xylan-derived compounds such as furfural, hydroxymethylfurfural, and 5-formyl-2-furancarboxylic acid (FFA). Furthermore, these xylan-derived components, functioning as components that exhibit color, degrade the hue of the cellulose acetate itself. However, an embodiment of the present invention provides cellulose acetate with excellent hue by optimizing conditions such as temperature particularly in the hydrolysis step where the material is exposed to high temperature. Note that the hydrolysis step can also be called an aging step.

Wood pulp

As the cellulose source of a raw material for the cellulose acetate of the present disclosure, a low grade wood pulp or other such material that contains xylose, which is a hemicellulose component, may be used. In the present specification, the term pulp or cellulose may be used with a meaning that includes materials containing different components, such as hemicellulose, other than cellulose.

Examples of wood pulp include softwood pulp and hardwood pulp. Examples of softwood pulp include those obtained from spruce trees, pine trees, and Japanese boxwood trees. Examples of hardwood pulp include those obtained from eucalyptus and acacia. These pulps may be used alone or in combination of two or more types; for example, a softwood pulp and a hardwood pulp may be used in combination.

A cellulose acetate with excellent hue can be obtained by the production method of the present disclosure even from wood pulp with low $\alpha$-cellulose content, but $\alpha$-cellulose content is preferably not less than 80 wt.%, more preferably not less than 85 wt.%, still more preferably not less than 90 wt.%, and most preferably not less than 95 wt.%. In a case where the $\alpha$-cellulose content is within the range above, a cellulose acetate having a hue of less than 0.80 cm$^{-1}$ at a wavelength of 430 nm by absorptiometry is easily obtained.

The $\alpha$-cellulose content can be determined as follows. Pulp of known weight is continuously extracted with a 17.5% sodium hydroxide aqueous solution and a 9.45% sodium hydroxide aqueous solution at 25°C. A soluble fraction of the extracted liquid is oxidized with potassium dichromate, and the weight of $\beta$- and $\gamma$-celluloses is determined from the volume of the potassium dichromate required for oxidation. A value obtained by subtracting the weight of $\beta$- and $\gamma$-celluloses from the initial pulp weight is used as the weight of the insoluble fraction of the pulp, i.e., the weight of the $\alpha$-cellulose (TAPPI T203). A rate of the weight of the insoluble fraction of the pulp to the initial pulp weight is $\alpha$-cellulose content (wt.%).

Wood pulp in the form of a sheet can be used. In this case, the sheet-shaped wood pulp preferably has a basis weight of not less than 300 g/m$^2$ and not greater than 850 g/m$^2$, a density of not less than 0.40 g/cm$^3$ and not greater than 0.60 g/cm$^3$, and a burst strength of not less than 50 KPa and not greater than 1000 KPa, but not limited thereto.

Crushing

The method for producing cellulose acetate of the present disclosure includes a step of crushing wood pulp. This can facilitate efficient and uniform reactions in subsequent steps, and also improve handling of reaction products. In particular, the crushing step may be effectively employed when the wood pulp is supplied in the form of a sheet.

For step (1) of crushing the wood pulp, a wet crushing method and a dry crushing method are available as methods for crushing the wood pulp. In the wet crushing method, water or steam is added to wood pulp such as a pulp sheet to crush the pulp. Examples of the wet crushing method include a method of activating the pulp with steam and carrying out high shear stirring in a reaction device, and a method of breaking down the pulp in a dilute acetic acid aqueous solution to form a slurry and then repeating liquid removal and acetic acid substitution, known as slurry pretreatment. The dry crushing method is a method of crushing wood pulp, such as a pulp sheet, in a dry state without adding water or steam thereto. Examples of the dry crushing method include a method of using a disc refiner having linear teeth to finely crush pulp that has been coarsely crushed with a disc refiner having pyramidal teeth; and a method of using a turbo mill equipped with: a cylindrical outer box having a liner attached to an inner wall, a plurality of discs that rotate at a high speed with a center line of the outer box as a center of rotation, and a plurality of blades attached between each of the discs in a radial direction with respect to the center line; to crush a material supplied into the outer box for crushing, with three types of actions of impact constituted of: striking with the blades, collision with the liner, and pressure vibration at high frequency generated by the action of the blades, the liner, and the discs rotating at high speed.

Any of these crushing methods can be used, as appropriate, in the cellulose acetate production method of the present disclosure, but, in particular, a method of using a disc refiner and a turbo mill subsequently to crush the pulp in two stages is preferred because this improves degree of filtration of the resulting cellulose acetate. In ordinary techniques, a highly bulky crushed product of a crushed pulp sheet is conveyed by air. However, in the production method of the present disclosure, an inert gas may be used instead of air to convey the crushed product of this pulp sheet.

Pretreatment

In step (2) of pretreating the crushed wood pulp by bringing the crushed wood pulp into contact with acetic acid, the acetic acid is used in an amount of, for example, preferably not less than 10 parts by weight and not greater than 500 parts by weight per 100 parts by weight of the wood pulp. In such a case, acetic acid of not less than 99 wt.% can be used.

Examples of the method for bringing the wood pulp into contact with acetic acid include a method of adding, in one stage, acetic acid or acetic acid containing not less than 1 wt.% and not greater than 10 wt.% of sulfuric acid (sulfur-containing acetic acid), or a method of adding acetic acid or a sulfur-containing acetic acid in two or more stages such as a method of adding acetic acid, and after a certain period of time has passed, adding a sulfur-containing acetic acid, and a method of adding a sulfur-containing acetic acid, and after a certain period of time has passed, adding sulfuric acid. An example of the specific means for addition is a method of spraying and mixing.

Furthermore, the pretreatment activation can be implemented by adding acetic acid and/or a sulfur-containing acetic acid to the pulp, and subsequently leaving the mixture still in a condition of not lower than 17°C and not higher than 40°C for not shorter than 0.2 hours and not longer than 48 hours, or stirring the mixture in an airtight condition of not lower than 17°C and not higher than 40°C for not shorter than 0.1 hours and not longer than 24 hours.

Acetylation

In step (3) of acetylating the wood pulp by reacting the wood pulp with acetic anhydride after the pretreatment, the acetylation can, for example, be initiated specifically by adding the pulp activated by pretreatment to a mixture containing acetic acid, acetic anhydride, and sulfuric acid, or by adding sulfuric acid and a mixture of acetic acid and acetic anhydride to the pulp activated by pretreatment. In such a case, acetic acid of not less than 99 wt.% can be used, and Sulfuric acid of not less than 98 wt.% is preferably used.

A mixture of acetic acid and acetic anhydride, if prepared, is not particularly limited as long as the mixture contains acetic acid and acetic anhydride, but the ratio of acetic acid and acetic anhydride is preferably not less than 200 parts by weight and not greater than 400 parts by weight of acetic anhydride per not less than 300 parts by weight and not greater than 600 parts by weight of acetic acid, and more preferably not less than 240 parts by weight and not greater than 280 parts by weight of acetic anhydride per not less than 350 parts by weight and not greater than 530 parts by weight of acetic acid.

The ratio of the pulp, the mixture of acetic acid and acetic anhydride, and the sulfuric acid is, per 100 parts by weight of the pulp, preferably not less than 500 parts by weight and not greater than 1000 parts by weight of the mixture of acetic acid and acetic anhydride, and preferably not less than 5 parts by weight and not greater than 15 parts by weight, more preferably not less than 7 parts by weight and not greater than 13 parts by weight, and still more preferably not less than 8 parts by weight and not greater than 11 parts by weight of sulfuric acid.

The highest attained temperature in the acetylation reaction system is preferably set at not lower than 35°C and not higher than 55°C, and more preferably not lower than 42°C and not higher than 50°C. This is because cellulose acetate with even better hue can be obtained at such temperature.

To set the highest attained temperature in the acetylation reaction system to a range of not lower than 35°C and not higher than 55°C (intermediate temperature range), the acetic anhydride is preferably precooled. Also, in a case where acetic acid and a catalyst, besides the acetic anhydride, are brought into contact with wood pulp, the acetic acid and the catalyst, besides the acetic anhydride, are all preferably precooled. A mixed solution of acetic anhydride, acetic acid, and a catalyst may be prepared and then precooled.

The precooling temperature is preferably in a range of not lower than -25°C and not higher than -10°C, and more preferably in a range of not lower than -22°C and not higher than -20°C. This is because with the range above, the highest attained temperature in the reaction system in the step (3) of acetylation can be in a range of not lower than 35°C and not higher than 55°C (intermediate temperature range), and thus cellulose acetate exhibiting even better hue can be obtained.

For example, an acetylating mixed solution, which contains acetic acid as a solvent, acetic anhydride as an acetylating agent, and sulfuric acid as a catalyst, is cooled in advance to not lower than -25°C and not higher than -10°C, and then wood pulp is added to the acetylating mixed solution and stirred. The acetic anhydride is used in a considerably excessive amount compared to the amounts of cellulose to be reacted therewith and of water present in the system. This can maintain the highest attained temperature in the range not lower than 35°C and not higher than 55°C even though the temperature of the cooled acetylating mixed solution may be raised by the heat of reaction of the acetic anhydride. Acetylation may also be conducted under stirring without adding any heat from outside to the inside or outside of the reaction system, or in addition, the reaction system can be cooled with a coolant under stirring to adjust to the intermediate temperature range.

The initial stage of the acetylation reaction is a reaction in a solid-liquid heterogeneous system, and to advance the acetylation reaction while suppressing a depolymerization acetylation reaction thereby reducing unreacted materials, the temperature is preferably increased such that the highest attained temperature in the acetylation reaction system reaches a range of not lower than 35°C and not higher than 55°C (intermediate temperature range) over as long a time period as possible. However, from the perspective of productivity, the temperature is increased such that the highest attained temperature reaches a range of not lower than 35°C and not higher than 55°C (intermediate temperature range) within not longer than 45 minutes, and more preferably not longer than 30 minutes from the start of contact of the wood pulp with the acetic anhydride. Furthermore, the acetylation reaction is retained for a certain period of time after the highest attained temperature is reached. The certain period of time to retain the acetylation reaction is preferably not shorter than 30 minutes and not longer than 50 minutes.

In addition, the time required for the acetylation reaction is desirably not shorter than 60 minutes and not longer than 90 minutes. The time required for the acetylation reaction means a period of time from the start of the reaction by bringing the wood pulp into contact with acetic anhydride until the neutralizing agent is added.

Hydrolysis

The cellulose acetate obtained by the acetylation above has almost all hydroxyl groups substituted by acetyl groups. Thus, the cellulose acetate needs to be hydrolyzed to adjust its degree of substitution to a desired degree. In the step (4) of hydrolysis, in a case where sulfuric acid is used as a catalyst, the sulfuric acid bonds to the cellulose as a sulfate ester by the acetylation reaction, and thus this step also aims to hydrolyze and remove the sulfate ester after the completion of the acetylation reaction to improve the thermal stability.

The degree of acetyl substitution can be adjusted by adding water (including steam), dilute acetic acid, or a neutralizing agent including a carbonate, an acetate, a hydroxide, or an oxide of an metal, such as calcium, magnesium, iron, aluminum, or zinc. Furthermore, water or water included in the neutralizing agent can be added and react with the acetic anhydride present in the reaction mixture that includes cellulose acetate to produce carboxylic acid such that the amount of water in the reaction mixture containing cellulose acetate after the degree of acetyl substitution is adjusted is not less than 5 mol% and not greater than 70 mol% with respect to that of the carboxylic acid. In a case where the degree of acetyl substitution is less than 5 mol%, depolymerization progresses but the hydrolysis reaction does not, thus resulting in low viscosity cellulose acetate. Conversely, in a case where the degree of acetyl substitution exceeds 70 mol%, the cellulose acetate after the completion of the acetylation reaction (the cellulose acetate prior to hydrolysis) precipitates and moves out of the hydrolysis reaction system, and thus a hydrolysis reaction of the precipitated cellulose acetate does not proceed.

Note that dilute acetic acid refers to an acetic acid aqueous solution with a concentration of not less than 1 wt.% and not greater than 50 wt.%. Furthermore, in a case where a magnesium acetate aqueous solution is used, the aqueous solution preferably has a concentration of not less than 5 wt.% and not greater than 30 wt.%.

In a case where the concentration of sulfuric acid ions in the reaction mixture containing the cellulose acetate is high, the sulfate cannot be efficiently removed. Preferably, an aqueous solution of an alkaline earth metal salt of acetic acid, such as magnesium acetate, or a mixed solution of acetic acid and water is added to form an insoluble sulfate, thereby reducing the concentration of sulfuric acid ions. The amount of sulfuric acid ions in the reaction mixture containing cellulose acetate is preferably adjusted to not less than 1 parts by weight and not greater than 6 parts by weight per 100 parts by weight of cellulose acetate (in terms of cellulose). Note that, for example, addition of a mixed solution of water and acetic acid of magnesium acetate to the reaction mixture containing cellulose acetate can stop the acetylation reaction and reduce the weight ratio of sulfuric acid ions to 100 parts by weight of the cellulose acetate (in terms of cellulose) at the same time.

In the step (4) of hydrolysis, the temperature in the reaction system is set to an intermediate temperature, i.e., a temperature of higher than 80°C and not higher than 90°C. Hydrolysis carried out at an intermediate temperature is called intermediate temperature hydrolysis. To achieve the intermediate temperature, steam may be used to increase the temperature in the system. For example, high pressure (a gauge pressure of 5 kg/cm$^2$, for example) steam is blown into the reaction system under stirring, and the temperature is allowed to reach a range of higher than 80°C and not higher than 90°C (intermediate temperature) over a period of time. The period of time required for increasing the temperature from the start of addition of the magnesium acetate aqueous solution to a temperature of higher than 80°C and not higher than 90°C is preferably not shorter than 50 minutes and not longer than 60 minutes. Moreover, during this temperature increase, the magnesium acetate aqueous solution is added and mixed to neutralize a portion of the sulfuric acid in the system. Furthermore, after a temperature of higher than 80°C and not higher than 90°C (intermediate temperature) is maintained for not shorter than 100 minutes and not longer than 150 minutes, and preferably not shorter than 100 minutes and not longer than 130 minutes, a magnesium acetate aqueous solution is added and mixed to completely neutralize the sulfuric acid in the system. This completes the hydrolysis reaction of the cellulose acetate.

Hydrolysis carried out at high temperature is called high temperature hydrolysis, and refers to a case in which the highest attained temperature in the reaction system is in a range of higher than 90°C and not higher than 200°C. To achieve the high temperature, the temperature setting of the hydrolysis reaction vessel (hydrolysis tank) is changed to a high temperature setting to increase the temperature in the system. Hydrolysis carried out at low temperature is called low temperature hydrolysis, and refers to a case in which the highest attained temperature in the reaction system is not higher than 80°C. To achieve the low temperature, the temperature setting of the hydrolysis reaction vessel (aging tank) is changed to a low temperature setting.

The step (4) of hydrolysis is preferably carried out by maintaining a temperature in the reaction system at higher than 80°C and not higher than 90°C for not shorter than 100 minutes and not longer than 150 minutes. Thus, a cellulose acetate with excellent hue is obtained. Furthermore, in a molding step, where the obtained cellulose acetate is molded into a molded article such as a fiber and a film, a solution prepared by dissolving the cellulose acetate in a solvent such as methylene chloride or acetone (the solution, namely dope) is less likely to clog a filter material, thus achieving excellent production of these molded articles.

In a case where the step (4) of hydrolysis is carried out at low temperature, i.e., at a temperature of not higher than 80°C, the cellulose acetate has a 6% viscosity of greater than 160 mPa•s. Then, when a mixture containing such a cellulose acetate is fed through a line to a precipitating tank after the step (4) of hydrolysis, the cellulose acetate tends to clog the line, and this can reduce the production efficiency of the cellulose acetate. In addition, in a molding step, where the obtained cellulose acetate is molded into a molded article such as a fiber and a film, a solution prepared by dissolving the cellulose acetate in a solvent such as methylene chloride or acetone (the solution, namely dope) tends to clog a filter material, thus reducing the production efficiency of these molded articles. In a case where the step (4) of hydrolysis is carried out at high temperature, i.e., at a temperature of higher than 90°C and not higher than 200°C, the hemicellulose can be reduced in its size chemically and thus the 6% viscosity does not exceed 160 mPa•s.However, the hue is degraded.

Precipitation

In the step (5) of precipitating the cellulose acetate whose degree of acetyl substitution has been adjusted by the hydrolysis, the mixture containing the cellulose acetate is mixed with a precipitant such as water, dilute acetic acid, or a magnesium acetate aqueous solution. The resulting cellulose acetate (precipitate) is separated to obtain a precipitate, and free metal components and sulfuric acid components can be removed by washing with water. Here, the precipitant that is used to obtain the precipitate of the cellulose acetate is preferably water or dilute acetic acid. This is because, by the use thereof, sulfates in the reaction mixture containing the cellulose acetate are dissolved, and the sulfates in the cellulose acetate obtained as a precipitate can be easily removed.

In particular, to remove the free metal components and the sulfuric acid components by washing with water and to increase the thermal stability of the cellulose acetate after the step (4) of hydrolysis (after the complete neutralization), an alkali metal compound and/or an alkaline earth metal compound, particularly a calcium compound, such as calcium hydroxide, may be added as a stabilizer when washing with water.

After the step (5) of precipitation, the cellulose acetate may be dehydrated and dried. The drying method is not particularly limited, and a well-known method can be used. For example, drying can be performed under conditions of blowing or reduced pressure. An example of the drying method includes hot air drying.

Cellulose acetate production device

The cellulose acetate can be produced using a production device as illustrated in FIG. 1. The production device includes a pretreating device 1, an acetylation reactor 2, an aging tank 3, and a precooling device 4. The pulp charged into the pretreating device 1 is a fluffy pulp obtained by crushing wood pulp with a crusher (not illustrated). The fluffy pulp is charged into the pretreating device 1, and while stirring, the pulp is brought into contact with acetic acid, to be pretreated and activated. Note that each M in FIG. 1 represents a motor that is used for stirring the reaction mixture in the respective device.

Furthermore, an acetic anhydride-acetic acid solution, sulfuric acid, and acetic acid are charged into the precooling device 4 to form a solution, and the solution is cooled in advance to a temperature of not lower than -25°C and not higher than -10°C. After the acetylation reactor 2 is charged with the solution from the precooling device 4, the pulp (cellulose) impregnated with acetic acid is charged through a line L1 into the acetylation reactor 2 while stirring, to carry out the acetylation reaction. A known reactor commonly used when producing cellulose acetate can be used for the acetylation reactor 2, but a mixing type reactor is preferred.

Next, a magnesium acetate aqueous solution is added into the acetylation reactor 2 and mixed to neutralize a portion of the sulfuric acid in the system. The reaction mixture in the acetylation reactor 2 is then transferred to the aging tank 3. High pressure (a gauge pressure of 5 kg/cm$^2$, for example) steam is then fed into the aging tank 3 under stirring, and the temperature is allowed to reach a range of higher than 80°C and not higher than 90°C (intermediate temperature) over a certain period of time.

Subsequently, after the temperature of higher than 80°C and not higher than 90°C (intermediate temperature) is maintained for not shorter than 100 minutes and not longer than 150 minutes, preferably not shorter than 100 minutes and not longer than 130 minutes, a magnesium acetate aqueous solution is added thereto and mixed to completely neutralize the sulfuric acid in the system. This completes the hydrolysis reaction of the cellulose acetate.

Furthermore, under a vigorous stirring of the reaction mixture in the aging tank 3, a precipitant such as water, dilute acetic acid, or a magnesium acetate aqueous solution is added, thereby forming flaky cellulose acetate. The cellulose acetate (precipitate) that is formed is separated to produce a precipitate. To remove the free metal components and the sulfuric acid components by washing with water and to increase the thermal stability of the cellulose acetate, an alkali metal compound and/or an alkaline earth metal compound, particularly a calcium compound, such as calcium hydroxide, may be added as a stabilizer when washing with water. Lastly, the precipitate is dehydrated and dried, and cellulose acetate can be obtained.

The cellulose acetate of the present disclosure, and the cellulose acetate produced by the method for producing the cellulose acetate of the present disclosure can be used, for example, in a wide range of applications such as in fibers for clothing; tobacco products such as cigarette filters and cigarette tips; plastics; films; and paints.

Examples

The present invention is described more specifically through examples below, but the technical scope of the present invention is not limited by these examples. Note that unless otherwise specified, the term "parts" means "parts by weight".

The physical properties mentioned in Examples and Comparative Examples described below were evaluated by the following methods.

α-Cellulose content

Pulp of a known weight was continuously extracted with a 17.5% sodium hydroxide aqueous solution and a 9.45% sodium hydroxide aqueous solution at 25°C. A soluble fraction of the extracted liquid was oxidized with potassium dichromate, and the weight of β- and γ-celluloses was determined from the volume of the potassium dichromate required for oxidation. A value obtained by subtracting the weight of β- and γ-celluloses from the initial pulp weight was used as the weight of the insoluble fraction of the pulp, i.e., the weight of the α-cellulose (TAPPI T203). A rate of the weight of the insoluble fraction of the pulp to the initial pulp weight is α-cellulose content (wt.%).

Hue by absorptiometry

(1) Measurement of water content of cellulose acetate

Water content of the cellulose acetate was measured using an infrared moisture analyzer (METTLER TOLEDO HB43), and recorded on a recording paper.

(2) Absorbance measurement

First, a sample was prepared. 1) 95.00 g of DMSO was weighed into an Erlenmeyer flask. 2) A stirrer rotator was placed in the Erlenmeyer flask, the flask was sealed with cellophane and a silicon plug, and the content was stirred. 3) 5.00 g of a cellulose acetate sample was weighed onto a powder paper and added into the Erlenmeyer flask while stirring. 4) The flask was sealed with cellophane and the silicon plug, and the contents were stirred for 1 hour with the stirrer. 5) The flask was shaken for 2 hours using a rotary shaker (high speed). 6) The flask was removed from the rotary shaker and then left stand still for 30 minutes to defoam, and thereby preparing a sample.

Next, absorbance was measured. Immediately after the sample was prepared, i.e., immediately after the flask removed from the rotary shaker was left stand still for 30 minutes to defoam, the absorbance was measured at wavelengths of $\lambda$ = 430 nm and 740 nm using a UV-1700 available from Shimadzu Corporation. Specifically, 1) The device was turned on not shorter than 30 minutes prior to measurement to ensure that the device was stabilized. 2) DMSO was added as a reference, a blank liquid for reference into a 10-cm glass cell to correct baseline. 3) The sample in the Erlenmeyer flask was transferred into a 10 cm glass cell while preventing bubble formation. 4) A measurement cell in the front side was replaced with the glass cell containing the injected sample. 5) The start button was pressed to begin measurement. 6) Displayed measurement result was recorded on the recording paper.

(3) Hue by absorptiometry

A value obtained by the following equation was used as the "hue by absorptiometry" of the cellulose acetate in the solvent thereof.

$$\text{Hue by absorptiometry (cm}^{-1}) = \text{absorbance (A - B)/cell thickness} \\ \text{(cm)/cellulose acetate concentration (wt.\%)} \times 100$$

Absorbance: Measured with a spectrophotometer UV-1700 available from Shimadzu Corporation

A: Absorbance at 430 nm (The yellowness of the liquid was measured)
B: Absorbance at 740 nm (The turbidity of the liquid was measured: base line)

Cellulose acetate concentration (wt.%): Absolute dry cellulose acetate weight (g) / total weight (g) of cellulose acetate solution x 100

Absolute dry cellulose acetate weight (g): Cellulose acetate weight (g) x (1 - (water content (%))/100)

Water content (%): Value measured by the infrared moisture analyzer

Molar content of xylose

A cellulose sample was subjected to a hydrolysis process, a neutralizing process using sodium hydroxide, and a filtration process using a filter. Then, HPLC (LC-20A system) was used to calculate not only the rate of xylose, but also the rates of the other constituent saccharides from the obtained data, and the molar content (mol%) of xylose was determined based on the total quantities of pentoses and hexoses. This was used as a molar content rate (mol%) of xylose in a sum of molar contents of xylose, mannose, and glucose.

HPLC measurement conditions are as follows.

Column: TSK-gel Sugar AXG 4.6 mm I.D. x 15 cm (Tosoh Corporation)

Column temperature: 70°C

Mobile phase: 0.5 mol/L potassium borate buffer solution, pH of 8.7

Mobile phase flow rate: 0.4 mL/min

Post column label: Reaction reagent: 1 w/v% arginine•3 w/v% boric acid

Reaction reagent flow rate: 0.5 mL/min

Reaction temperature: 150°C

Detection wavelength: Ex. 320 nm, Em. 430 nm

Calcium content and magnesium content

3.0 g of an undried sample was weighed into a crucible, carbonized on an electric heater, and then incinerated in an electric furnace at not lower than 750°C and 850°C for approximately 2 hours. The residue was then allowed to cool for approximately 30 minutes, after which 25 mL of a 0.07% hydrochloric acid solution was added thereto, and the mixture was heated at not lower than 220°C and not higher than 230°C to dissolve the residue. After the mixture was cooled, distilled water was added to the solution to make up to 200 mL, and the resulting mixture was used as a test liquid. An atomic absorption spectrophotometer was used to measure the absorbance of the test liquid along with that of a standard liquid to determine the calcium (Ca) content or the magnesium (Mg) content of the test liquid. This content was converted by the following equation to determine the calcium (Ca) content or the magnesium (Mg) content in the sample. Note that the water content in the sample can be measured, for example, using a Kett moisture meter (METTLER TOLEDO HB43). Approximately 2.0 g of the sample, which contains water, is placed into an aluminum sample pan of the Kett moisture meter, and the sample is heated at 120°C until the weight no longer changes, and thereby the water content (wt.%) in the sample can be calculated from the change in weight before and after heating.

[Equation 2]

$$\text{Ca or Mg content (ppm) of sample} = \frac{\text{Ca or Mg content (ppm) of test liquid x 200}}{\text{Sample weight (g) x (1 - water content (wt.\%)/100)}}$$

6% Viscosity

3.00 g of a dried sample and 39.90 g of a 95% acetone aqueous solution were charged into an Erlenmeyer flask. The flask was sealed tightly, and the contents were stirred for approximately 1 hour. Thereafter, the flask was shaken for approximately 1.5 hours using a rotary shaker to completely dissolve the sample. The obtained 6 wt./vol% solution was transferred to a predetermined Ostwald viscometer up to a marked line, and the temperature was adjusted at 25 ± 1°C for approximately 30 minutes. Downward flow time between marked lines for time measurement was measured, and a 6% viscosity (mPa•s) was calculated by the following equation.

$$6\% \text{ Viscosity (mPa•s)} = \text{downward flow time (s) x viscometer coefficient}$$

Here, the viscometer coefficient is determined by using a standard liquid for viscometer calibration [trade name "JS-200" from Show a Shell Sekiyu K.K. (in accordance with JIS Z 8809)], measuring the downward flow time with similar operation as described above, and calculating by the following equation.

$$\text{Viscometer coefficient} = \{\text{standard liquid absolute viscosity (mPa·s)} \times$$
$$\text{density of solution } (0.827 \text{ g/cm}^3)\}/\{\text{density of standard liquid (g/cm}^3) \times \text{number}$$
$$\text{of seconds (s) for downward flow of standard liquid}\}$$

Examples 1 to 5

Cellulose acetate was produced using a reaction device illustrated in FIG. 1 and each raw material pulp described in Table 1. First, the raw material pulp described in Table 1 was crushed into a fluffy state using a crusher (not illustrated). 100 parts by weight of the fluffy pulp was charged into the pretreating device 1, and 29 parts by weight of acetic acid was added thereto to pretreat and activate the pulp at 35°C for 60 minutes. Also, 503 parts by weight of a 45 wt.% acetic anhydride-acetic acid solution, 13 parts by weight of 98 wt.% sulfuric acid, and 29 parts by weight of 99 wt.% acetic acid were charged into the precooling device 4, and the mixture was cooled in advance to -17°C. The solution from the precooling device 4 was charged into the acetylation reactor 2 and then pulp impregnated with acetic acid was charged into the acetylation reactor 2 while stirring. Furthermore, through a line L1 connecting the pretreating device 1 and the acetylation reactor 2, 18 parts by weight of the 45 wt.% acetic anhydride-acetic acid solution was charged into the acetylation reactor 2 and an acetylation reaction was initiated. At the initial stage of the acetylation reaction, hydrolysis between the moisture present in the raw material pulp and the acetic anhydride proceeded rapidly. Subsequently, at approximately 45 minutes, the temperature was adjusted by the heat of the acetylation reaction so as to be approximately 48°C. Next, the reaction was carried out for approximately 30 minutes. After the reaction ended, 45 parts by weight of a 24 wt.% magnesium acetate aqueous solution was added to the acetylation reactor 2 and mixed to neutralize a portion of the sulfuric acid in the system and to hydrolyze the acetic anhydride. Thereafter, the reaction mixture in the acetylation reactor 2 was transferred to the aging tank 3. The aging step was carried out at a temperature of 85°C for 110 minutes. During the aging step, 10 parts by weight of the 24 wt.% magnesium acetate aqueous solution was added to the aging tank 3 and mixed to neutralize a portion of the sulfuric acid in the system. In addition, to adjust the concentration in the system, 17 parts by weight of water was added to the aging tank 3. After the aging step was completed, 16 parts by weight of the 24 wt.% magnesium acetate aqueous solution was added and mixed to completely neutralize the sulfuric acid in the system. Lastly, to adjust the concentration in the system, 58 parts by weight of water was added to the aging tank 3. Under a vigorous stirring, a dilute acetic acid aqueous solution was added to the reaction mixture, thereby forming flaky cellulose acetate. Thereafter, the cellulose acetate was washed thoroughly with water and taken out, and then dehydrated and dried by hot air drying. Evaluation results of physical properties of the obtained cellulose acetates and each raw material are shown in Table 1.

Comparative Examples 1 to 5

Cellulose acetate was produced using the reaction device illustrated in FIG. 1 and each raw material described in Table 1. Cellulose acetates were prepared in a similar manner as in each example with the exception that the aging step was carried out at a temperature of not lower than 100°C and not higher than 105°C for 110 minutes. Evaluation results of physical properties of the obtained cellulose acetates and each raw material are shown in Table 1.

Comparative Examples 6 to 10

Cellulose acetate was produced using the reaction device illustrated in FIG. 1 and each raw material described in Table 1. Cellulose acetates were prepared in a similar manner as in each example with the exception that the aging step was carried out at a temperature of not lower than 60°C and not higher than 65°C for 110 minutes. Evaluation results of physical properties of the obtained cellulose acetates and each raw material are shown in Table 1.

[Table 1]

| | Raw material pulp | | Temperature condition in hydrolysis step (°C) | Hue by absorptiometry (cm$^{-1}$) | Molar content of xylose (mol%) | Calcium content (ppm) | Magnesium content (ppm) | 6% Viscosity (mPa•s) |
|---|---|---|---|---|---|---|---|---|
| | Tree species | α-Cellulose content (wt. %) | | | | | | |
| Example 1 | Eucalyptus | 93 | 85 | 0.37 | 1.58 | 90 | 20 | 141 |
| Example 2 | Eucalyptus | 81 | | 0.80 | 13.73 | 92 | 22 | 140 |
| Example 3 | Spruce | 93 | | 0.39 | 1.21 | 91 | 21 | 142 |
| Example 4 | Spruce | 93 | | 0.40 | 1.73 | 91 | 21 | 150 |
| Example 5 | Pine | 87 | | 0.63 | 5.36 | 94 | 23 | 155 |
| Comparative Example 1 | Eucalyptus | 93 | 100 | 0.81 | 1.54 | 90 | 20 | 99 |
| Comparative Example 2 | Eucalyptus | 81 | | 1.84 | 13.31 | 92 | 22 | 98 |
| Comparative Example 3 | Spruce | 93 | | 0.82 | 1.17 | 91 | 21 | 99 |
| Comparative Example 4 | Spruce | 93 | | 0.88 | 1.68 | 91 | 21 | 105 |
| Comparative Example 5 | Pine | 87 | | 1.39 | 5.20 | 94 | 23 | 109 |
| Comparative Example 6 | Eucalyptus | 93 | 60 | 0.26 | 1.63 | 90 | 20 | 183 |
| Comparative Example 7 | Eucalyptus | 81 | | 0.56 | 14.14 | 92 | 22 | 182 |
| Comparative Example 8 | Spruce | 93 | | 0.27 | 1.24 | 91 | 21 | 185 |
| Comparative Example 9 | Spruce | 93 | | 0.28 | 1.78 | 91 | 21 | 195 |
| Comparative Example 10 | Pine | 87 | | 0.44 | 5.52 | 94 | 23 | 202 |

As shown in Table 1, in Comparative Examples 1 to 5, prepared by setting the highest attained temperature at 100°C in the hydrolysis step, all exhibit inferior hue with a hue of greater than 0.8 cm$^{-1}$ at a wavelength of 430 nm by absorptiometry. In addition, in Comparative Examples 6 to 10, prepared by setting the highest attained temperature at 60°C in the hydrolysis step, all exhibit excellent hue with a hue of 0.8 cm$^{-1}$ at a wavelength of 430 nm by absorptiometry. However, they have a 6% viscosity of greater than 160 mPa•s, and in the step of molding the obtained cellulose acetate, they are apt to clog the filter medium and thus inferior in the production efficiency of molded articles. On the other hand, in Examples 1 to 5, prepared by setting the highest attained temperature at 85°C in the hydrolysis step, cellulose acetates that excelled in hue, and also in the moldability of molded articles and production efficiency thereof were provided, as they all exhibited a hue of 0.8 cm$^{-1}$ at a wavelength of 430 nm by absorptiometry and a 6% viscosity of not greater than 160 mPa•s.

**Claims**

1. Cellulose acetate
   comprising xylose with a molar content rate of greater than 1.0 mol% and not greater than 15 mol% in a sum of molar contents of xylose, mannose, and glucose, and
   having a hue of not greater than 0.80 cm$^{-1}$ at a wavelength of 430 nm by absorptiometry,
   wherein the cellulose acetate comprising xylose with a molar content rate of greater than 1.0 mol% and not greater than 5.0 mol% in a sum of molar contents of xylose, mannose, and glucose, and
   having a hue of not less than 0.60 cm$^{-1}$ and not greater than 0.80 cm$^{-1}$ at a wavelength of 430 nm by absorptiometry is excepted; and
   having a 6% viscosity of not greater than 160 mPa•s.

2. The cellulose acetate according to claim 1, comprising xylose with a molar content rate of not less than 1.2 mol% in a sum of molar contents of xylose, mannose, and glucose.

3. The cellulose acetate according to claim 1 or 2, comprising xylose with a molar content rate of not greater than 5.0 mol% in a sum of molar contents of xylose, mannose, and glucose.

4. The cellulose acetate according to claim 1,
   comprising xylose with a molar content rate of greater than 7.0 mol% and not greater than 15 mol% in a sum of molar contents of xylose, mannose, and glucose, and
   having a hue of not less than 0.60 cm$^{-1}$ and less than 0.80 cm$^{-1}$ at a wavelength of 430 nm by absorptiometry.

5. The cellulose acetate according to claim 1,
   comprising xylose with a molar content rate of greater than 5.0 mol% and not greater than 7.0 mol% in a sum of molar contents of xylose, mannose, and glucose, and
   having a hue of not less than 0.60 cm$^{-1}$ and less than 0.80 cm$^{-1}$ at a wavelength of 430 nm by absorptiometry.

6. The cellulose acetate according to any one of claims 1 to 5, having a magnesium content of greater than 5 ppm and not greater than 40 ppm.

7. A method for producing cellulose acetate, the method comprising the steps of:

   (1) crushing wood pulp;
   (2) pretreating the crushed wood pulp by bringing the crushed wood pulp into contact with acetic acid;
   (3) acetylating the wood pulp by reacting the wood pulp with acetic anhydride after the pretreatment;
   (4) hydrolyzing the cellulose acetate obtained by the acetylation; and
   (5) precipitating the cellulose acetate whose degree of acetyl substitution has been adjusted by the hydrolysis;
   wherein, in the step (4) of hydrolysis, a temperature in the hydrolysis reaction system of higher than 80°C and not higher than 90°C is maintained for not shorter than 100 minutes and not longer than 150 minutes.

**Amended claims under Art. 19.1 PCT**

1. (Deleted)

**2.** (Deleted)

**3.** (Deleted)

**4.** (After Amendment)
Cellulose acetate
comprising xylose with a molar content rate of greater than 7.0 mol% and not greater than 15 mol% in a sum of molar contents of xylose, mannose, and glucose,
having a hue of not less than 0.60 cm$^{-1}$ and less than 0.80 cm$^{-1}$ at a wavelength of 430 nm by absorptiometry, and having a 6% viscosity of not greater than 160 mPa•s.

**5.** (After Amendment)
Cellulose acetate
comprising xylose with a molar content rate of greater than 5.0 mol% and not greater than 7.0 mol% in a sum of molar contents of xylose, mannose, and glucose,
having a hue of not less than 0.60 cm$^{-1}$ and less than 0.80 cm$^{-1}$ at a wavelength of 430 nm by absorptiometry, and having a 6% viscosity of not greater than 160 mPa•s.

**6.** (After Amendment)
The cellulose acetate according to claim 4 or 5, having a magnesium content of greater than 5 ppm and not greater than 40 ppm.

**7.** (After Amendment)
A method for producing cellulose acetate according to any one of claims 4 to 6, the method comprising the steps of:

(1) crushing wood pulp;
(2) pretreating the crushed wood pulp by bringing the crushed wood pulp into contact with acetic acid;
(3) acetylating the wood pulp by reacting the wood pulp with acetic anhydride after the pretreatment;
(4) hydrolyzing the cellulose acetate obtained by the acetylation; and
(5) precipitating the cellulose acetate whose degree of acetyl substitution has been adjusted by the hydrolysis;
wherein, in the step (4) of hydrolysis, a temperature in the hydrolysis reaction system of higher than 80°C and not higher than 90°C is maintained for not shorter than 100 minutes and not longer than 150 minutes.

PULP

**FIG. 1**

## INTERNATIONAL SEARCH REPORT

| International application No. |
|---|
| PCT/JP2017/035557 |

**A. CLASSIFICATION OF SUBJECT MATTER**
*C08B3/06*(2006.01)i

According to International Patent Classification (IPC) or to both national classification and IPC

**B. FIELDS SEARCHED**

Minimum documentation searched (classification system followed by classification symbols)
C08B3/06

Documentation searched other than minimum documentation to the extent that such documents are included in the fields searched
Jitsuyo Shinan Koho       1922-1996   Jitsuyo Shinan Toroku Koho   1996-2017
Kokai Jitsuyo Shinan Koho  1971-2017   Toroku Jitsuyo Shinan Koho   1994-2017

Electronic data base consulted during the international search (name of data base and, where practicable, search terms used)
JSTPlus/JMEDPlus/JST7580(JDreamIII)

**C. DOCUMENTS CONSIDERED TO BE RELEVANT**

| Category* | Citation of document, with indication, where appropriate, of the relevant passages | Relevant to claim No. |
|---|---|---|
| X<br>A | WO 2016/135778 A1  (Daicel Corp.),<br>01 September 2016 (01.09.2016),<br>claims; paragraphs [0084] to [0086],<br>comparative example 1<br>(Family: none) | 1-3,6-7<br>4-5 |
| X<br>A | JP 2011-215630 A  (Daicel Chemical Industries,<br>Ltd.),<br>27 October 2011 (27.10.2011),<br>claims; paragraph [0090], example 1<br>(Family: none) | 1-3,6-7<br>4-5 |

[X] Further documents are listed in the continuation of Box C.      [ ] See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 08 November 2017 (08.11.17) | 21 November 2017 (21.11.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.

PCT/JP2017/035557

C (Continuation).  DOCUMENTS CONSIDERED TO BE RELEVANT

| Category* | Citation of document, with indication, where appropriate, of the relevant passages | Relevant to claim No. |
|---|---|---|
| X<br>A | JP 2011-158664 A  (Daicel Chemical Industries, Ltd.),<br>18 August 2011 (18.08.2011),<br>claims; paragraph [0090], example 1<br>& US 2012/0172585 A1<br>claims; paragraph [0120], example 1<br>& WO 2011/093216 A1     & EP 2472296 A1<br>& KR 10-2011-0093932 A  & CN 102597824 A | 1-3,6-7<br>4-5 |
| P,X | WO 2017/061474 A1  (Daicel Corp.),<br>13 April 2017 (13.04.2017),<br>claims<br>(Family: none) | 1-7 |

Form PCT/ISA/210 (continuation of second sheet) (January 2015)

**EP 3 521 316 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3767642 A

- JP 62000501 A

**Non-patent literature cited in the description**

- **MIGITA et al.** Wood Chemistry. Kyoritsu Shuppan Co., Ltd, 1968, vol. 1, 180-190